# EUROPÄISCHE PATENTSCHRIFT

(11) **EP 0 659 636 B1**
(45) Veröffentlichungstag und Bekanntmachung des Hinweises auf die Patenterteilung: **05.03.1997**
(21) Anmeldenummer: 94119644.6
(22) Anmeldetag: 13.12.1994
(51) Int. Cl.: B62M 1/10

(54) **Antrieb mit Energiespeicher für ein Fahrrad**
Transmission with energy storing system for a bicycle
Entraînement pour bicyclette avec accumulation d'énergie

(30) Priorität: 21.12.1993 DE 4343628
(43) Veröffentlichungstag der Anmeldung: 28.06.1995
(73) Patentinhaber: Osiander, Michael, 85072 Eichstätt (DE)
(72) Erfinder: Osiander, Michael, 85072 Eichstätt (DE)
(74) Vertreter: Neubauer, Hans-Jürgen, Dipl.-Phys.

(56) Entgegenhaltungen:
- DE-A- 1 918 268
- FR-A- 551 491
- GB-A- 456 170
- PATENT ABSTRACTS OF JAPAN vol. 15, no. 339 (M-1152) 28. August 1991 & JP-A-03 132 493 (SHOSHISHI) 5. Juni 1991

## Beschreibung

Die Erfindung betrifft einen Antrieb mit Energiespeicher für ein Fahrrad nach dem Oberbegriff des Anspruchs 1.

Bei üblichen Fahrrädern wird Bewegungsenergie beim Abbremsen in Reibarbeit und Wärme umgewandelt und geht dabei für eine Wiederverwertung verloren. Es ist bereits bekannt, mittels Federanordnungen die Bremsenergie zu speichern und diese zum Anfahren, Beschleunigen oder bei Bergfahrten dem Fahrradantrieb wieder zuzuführen:

In einer bekannten gattungsgemäßen Ausführungsformen (DE-OS 1 918 268) wird als Energiespeicher eine Spiralfederanordnung verwendet, die im mittleren Bereich des Fahrradrahmens angeordnet sind. Dadurch sind wenigstens drei Antriebsketten mit aufwendigen Zahnradgetrieben erforderlich, um Bewegungsenergie abzuspeichern und wieder verfügbar zu machen. Teilweise laufen die Ketten zum Energiespeicher während des normalen Fahrradbetriebs ständig mit. Die Übersetzungsverhältnisse sind dabei festgelegt, so daß keine Möglichkeit besteht, je nach Bedarf mehr oder weniger Energie aus dem Energiespeicher dem Fahrradantrieb zuzuführen. Weiter sind ähnliche Ausführungsformen bekannt (DE-PS 404 328; DE-PS 80 964).

In anderen, bekannten Ausführungsformen (DE-PS 37 24 265; DE 33 37 907) werden kompakte Energiespeicher mit Spiralfedern verwendet, in denen alle erforderlichen Teile für den Betrieb, wie Kupplungen, Freiläufe und beispielsweise ein Planetengetriebe, integriert sind. Diese kompakten Anordnungen erlauben nur die Verwendung einer relativ kleinen Spiralfeder, so daß nur wenig Energie gespeichert werden kann. Der vorgeschlagene Einbau im Vorderrad eines Fahrrads führt zu einer starken Beeinträchtigung des Lenkverhaltens.

Aufgabe der Erfindung ist es demgegenüber, einen Antrieb mit Energiespeicher für ein Fahrrad zu schaffen, der bei hoher Energiespeichermöglichkeit nur zwei Kettenantriebe erforderlich macht und je nach Bedarf Variationsmöglichkeiten im Einsatz des Energiespeichers umfaßt.

Diese Aufgabe wird bei einem gattungsgemäßen Antrieb mit Energiespeicher für ein Fahrrad mit den kennzeichnenden Merkmalen des Anspruchs 1 gelöst.

Gemäß Anspruch 1 ist auf der Tretkurbelwelle eine Tretlagerhohlwelle drehbar gelagert, an deren einer Seite der erste Kettenradsatz fest angebracht ist und an deren anderer Seite der zweite Kettenradsatz drehbar gelagert ist. Die Tretlagerhohlwelle ist mit der Tretkurbelwelle durch einen Freilauf verbunden, der bei einer Drehzahl der Tretkurbelwelle kleiner als die der Tretlagerhohlwelle frei läuft. Der zweite Kettenradsatz ist mit der Tretlagerhohlwelle durch einen Freilauf verbunden, der bei einer Drehzahl des zweiten Kettenradsatzes kleiner als die der Tretlagerhohlwelle frei läuft.

Der erste Hinterradritzelsatz ist einerseits über die erste Kette mit dem ersten Kettenradsatz verbunden und andererseits mit dem Laufrad durch einen Freilauf verbunden. Dieser läuft bei einer Drehzahl des ersten Hinterradritzelsatzes kleiner als die des Laufrades frei.

Innerhalb des Laufradbereichs ist ein zweites Rad als Speicherrad drehbar angebracht, innerhalb dem der Spiralfederspeicher enthalten ist. In dessen Bereich ragt eine Hinterradhohlwelle, wo ein inneres Ende der Spiralfeder des Spiralfederspeichers befestigt ist. Das andere Ende der Spiralfeder ist am Außendurchmesser des Speicherrads bzw. der Speicherradfelge befestigt. Die Hinterradhohlwelle ist drehbar auf der Hinterradachse gelagert.

An der Hinterradhohlwelle ist der zweite Hinterradritzelsatz fest angebracht, der mit der zweiten Kette mit dem zweiten Kettenradsatz verbunden ist. Die Drehzahl dieses zweiten Hinterradritzelsatzes ist mit Hilfe einer von einem Fahrer betätigbaren Drehzahlreduziereinrichtung gegenüber der Drehzahl des Speicherrads reduzierbar.

Das Speicherrad ist mit dem Laufrad über eine Mitnahmeverbindung bevorzugt lösbar verbunden. Zudem ist das drehbar gelagerte Speicherrad mit der feststehenden Hinterradachse durch einen Freilauf als Rückdrehsperre verbunden, der das Speicherrad gegen eine Rückwärtsdrehung abstützt.

Die Anordnung des Energiespeichers innerhalb des Hinterrades als hinterem Laufrad bietet eine Reihe von Vorteilen: Hier steht ein großes Volumen für eine große Spiralfeder zur Verfügung. Der Aufzug der Spiralfeder kann direkt ohne die Verwendung eines weiteren Kettenantriebs erfolgen. Der Aufzug der Spiralfeder wird am äußeren Spiralfederende durchgeführt, während die Abnahme der gespeicherten Energie am inneren Sprialfederende im inneren Nabenbereich erfolgt. Dadurch kann im Gegensatz zu einer Anordnung, bei der der Aufzug und die Energieentnahme an einer zentralen Welle vorgenommen werden, eine Einrichtung zur Drehrichtungsumkehr entfallen.

Zudem wird über die Hinterradhohlwelle die gespeicherte Bewegungsenergie abgenommen und nicht direkt dem Laufrad zugeführt, sondern erst über die Tretkurbeleinrichtung geführt, wodurch in Verbindung mit den beanspruchten Freilaufanordnungen eine Reihe von Variationen bei der Benutzung des Energiespeichers möglich ist:

Wird die Drehzahlreduziereinrichtung nicht betätigt und damit der Energiespeicher nicht gefüllt (oder ist in einer weiterführenden Ausführungsform z. B. nach Anspruch 3 oder 6 eine lösbare Mitnahmeverbindung nicht im Eingriff), kann das Fahrrad so verwendet werden, wie wenn die Energiespeichereinrichtung nicht vorhanden wäre. Es ist somit eine Fortbewegung durch eine Tretkurbelbetätigung oder ein Freilauf bei stillstehender Tretkurbel möglich.

Für eine schnelle Energiespeicherung wird bei hergestellter Mitnahmeverbindung die Drehzahl des zweiten Hinterradritzelsatzes stark reduziert oder z. B. gemäß Anspruch 2 arretiert. Dabei erfolgt ein schneller Aufzug des Spiralfederspeichers sowohl bei einem Antrieb mit Tretbewegung als auch bei Bergabfahrten ohne Tretbewegung. Der Energiespeicher kann somit zweckmäßigerweise auch bei leichten Bergabfahrten in Verbindung mit einer Tretbewegung geladen werden. Bei stärkeren Bergabfahrten führt das Laden des Energiespeichers zu einer gewünschten Bremswirkung.

Die gespeicherte Energie kann aus dem Energiespeicher wieder für den Antrieb des Laufrads zur Verfügung gestellt werden, wobei die Drehzahlreduzierung des zweiten Hinterradritzelsatzes vom Fahrer wieder aufgehoben wird. Die gespeicherte Energie kann aufgrund der beanspruchten Freilaufanordnungen alleine oder zur Unterstützung der Tretbewegung verwendet werden. Weitere Betriebsmöglichkeiten und Sicherungseinrichtungen ergeben sich mit der lösbaren Mitnahmeverbindung gemäß Anspruch 3.

Mit den Merkmalen des Anspruchs 4 werden zweckmäßige Anordnungen der Bauteile insbesondere von Nabenteilen angegeben.

Mit den Merkmalen des Anspruchs 5 wird erreicht, daß der gesamte, vom hinteren Laufrad begrenzte Bereich für die Energiespeicherung durch die Spiralfeder im Speicherrad ausgenützt wird. Das Speicherrad kann dazu als Scheibenrad mit einem inneren Hohlraum für die Spiralfeder oder als Anordnung mit Nabe, Felge und Speichen ausgeführt sein.

Nach Anspruch 6 ist die lösbare Mitnahmeverbindung durch ein verschiebbares Laschenteil sealisiert, das seitlich über den Bereich des Laufrads vorsteht und das durch Betätigungshebel an festen Rahmenteilen verschiebbar ist.

Diese Mitnahmeverbindung kann bevorzugt auch dadurch gelöst werden, daß das Schiebestück durch die Kraft der Spiralfeder bei annähernd vollem Energiespeicher selbsttätig zurückgeschoben wird, so daß keine Blockierung des Laufrads oder eine Überlastung der Spiralfeder erfolgt.

Die Verriegelung des Hinterradritzelsatzes wird gemäß Anspruch 7 einfach mit einem Riegel am Fahrradrahmen durchgeführt, der in eine entsprechende Ausnehmung am Hinterradzahnkranz eingreift. Der Riegel kann mit Hilfe eines Bowdenzugs vom Lenker aus verstellt werden.

Aus Sicherheitsgründen ist es nach Anspruch 8 zweckmäßig, zusätzlich und unter Verwendung der verstellbaren Verriegelung eine Sicherheitsarretierung zu verwenden, die nur durch das Gewicht eines auf dem Fahrrad sitzenden Fahrers freigegeben wird. Eine solche Anordnung kann beispielsweise durch eine an sich bekannte, überdrückbare Feder durchgeführt werden. Damit wird erreicht, daß bei geladenem Energiespeicher dieser nicht durch Manipulationen an einem abgestellten Fahrrad entleert wird. Das Fahrrad würde dabei ungewollt beschleunigen und eine Gefahr für Passanten darstellen.

In einer besonders bevorzugten Ausführungsform nach Anspruch 9 bestehen der erste und/oder zweite Kettenradsatz und der erste und/oder zweite Hinterradritzelsatz aus wenigstens zwei Zahnrädern unterschiedlichen Durchmessers und sind Bestandteile jeweils einer an sich bekannten Kettenschaltung. Es sind somit zwei Kettenschaltungen zu beiden Seiten des Tretlagers bzw. des Hinterrades vorgesehen, die unterschiedlich eingestellt werden können. Mit der einen Kettenschaltung wird der Antrieb über die Tretkurbelbewegung verändert, während mit der anderen Kettenschaltung die Speicherung und Zurverfügungstellung von gespeicherter Energie verändert werden kann. Für eine geeignete Kraftverteilung sind dabei die Durchmesserangaben gemäß Anspruch 10 zu wählen.

Mit diesen Merkmalen wird es in besonders vorteilhafter Weise möglich, eine dosierte Energiespeicherung vorzunehmen, wenn entsprechend der unterschiedlich gewählten Einstellungen an beiden Kettenschaltungen eine Relativbewegung zwischen dem Laufrad bzw. Speicherrad und der Hinterradhohlwelle vorliegt, dergestalt, daß das Speicherrad schneller als die Hinterradhohlwelle läuft. Dazu muß die Verbindung zwischen dem Schiebestück und der Lasche geschlossen sein, da nur dann ein Aufzug der Speicherfeder erfolgen kann. Die Drehzalreduziereinrichtung besteht hierbei aus den beiden Kettenschaltungen.

Andererseits kann auch je nach Bedarf dosiert Energie aus dem Energiespeicher bei entsprechender Einstellung der beiden Kettenschaltungen entnommen werden, wenn eine Relativbewegung zwischen dem Speicherrad und der Hinterradhohlwelle vorliegt, dergestalt, daß die Drehzahl der Hinterradhohlwelle größer als die des Speicherrads ist. Für diese Funktion ist eine Verbindung zwischen Schiebestück und Lasche möglich oder nicht. Der Speicher kann dadurch je nach der Kraft des Fahrers und den Gegebenheiten des Geländes mehr oder weniger schnell geladen oder entladen werden. Dabei ist grundsätzlich auch eine Koppelung der Schaltungsbetätigung beider Kettenschaltungen zur Vereinfachung der Handhabung möglich.

Anhand einer Zeichnung werden Ausführungsbeispiele der Erfindung mit weiteren Einzelheiten, Merkmalen und Vorteilen näher erläutert.

Es zeigen:
- Fig. 1: einen schematischen Schnitt durch eine Tretkurbeleinrichtung und Hinterradeinrichtung, und
- Fig. 2: eine Ausführung einer lösbaren Mitnahmeverbindung.

Die Tretkurbeleinrichtung 1 umfaßt eine Tretkurbelwelle 2 mit (nicht dargestellten) Tretpedalen sowie einen ersten Kettenradsatz 3 mit zwei unterschiedlich großen Zahnrädern und einen zweiten Kettenradsatz 4 mit ebenfalls zwei unterschiedlich großen Zahnrädern. Auf der Tretkurbelwelle 2 ist eine Tretlagerhohlwelle 5 gelagert, auf der an einer ersten Seite der erste Kettenradsatz 3 fest angebracht ist und auf der an einer zweiten Seite der zweite Kettenradsatz 4 drehbar gelagert ist.

An der zweiten Seite des zweiten Kettenradsatzes 4 sind zwei (schematisch dargestellte) Freiläufe 6 und 7 angebracht. Der Freilauf 6 verbindet die Tretlagerhohlwelle 5 mit der Tretkurbelwelle 2 und läuft bei einer Drehzahl der Tretkurbelwelle 2 kleiner als die der Tretlagerhohlwelle 5 frei. Der Freilauf 7 verbindet den zweiten Kettenradsatz 4 mit der Tretlagerhohlwelle 5 und läuft bei einer Drehzahl des zweiten Kettenradsatzes 4 kleiner als die der Pedalhohlwelle 5 frei.

Die Hinterradeinrichtung 8 umfaßt ein Laufrad 9 mit einem Luftreifen 10 und Speichen 11 sowie einer Felge 12 und einem ersten Nabenteil 13 und einem zweiten Nabenteil 14.

Auf einer feststehenden Hinterradachse 15 ist eine Hinterradhohlwelle 16 drehbar gelagert, die mit einem Überstand 17 einseitig aus dem Nabenbereich des Laufrads 9 vorsteht. Eine erste Seite des Laufrads 9 läuft mit dem ersten Nabenteil 13 auf der Hinterradachse 15. Die andere, zweite Seite des Laufrads 9 läuft mit dem zweiten Nabenteil 14 auf dem Überstand 17 der Hinterradhohlwelle 16.

Am Nabenteil 13 ist ein erster Hinterradritzelsatz 18 befestigt und mit dem Laufrad 9 durch einen Freilauf 19 verbunden, der bei einer Drehzahl des ersten Hinterradritzelsatzes 18 kleiner als die des Laufrades 9 frei läuft.

Auf dem Überstand 17 der Hinterradhohlwelle 16 ist ein zweiter Hinterradritzelsatz 20 fest angebracht. Der erste und zweite Hinterradritzelsatz 18, 20 bestehen aus jeweils unterschiedlichen Zahnrädern mit unterschiedlichem Durchmesser, wobei die Zahnräder des zweiten Hinterradritzelsatzes insgesamt größer gewählt sind.

Der zweite Hinterradritzelsatz 20 ist mit Hilfe einer vom Fahrer über einen Bowdenzug betätigbaren (nur schematisch dargestellten) Verriegelung 31 arretierbar. Zudem ist eine (ebenfalls nicht dargestellte) Sicherheitsarretierung vorgesehen, die nur durch das Gewicht eines auf dem Fahrrad sitzenden Fahrers freigegeben wird.

Innerhalb des Laufradbereichs ist ein zweites Rad als Speicherrad 21 drehbar angebracht, innerhalb dem ein Spiralfederspeicher 22 angeordnet ist. In den Nabenbereich des Speicherrads 21 ragt mit einer Seite die Hinterradhohlwelle 16. Mit dieser Hinterradhohlwelle 16 ist ein Ende der Spiralfeder 22 fest verbunden. Mit einem Nabenteil 23 läuft das Speicherrad 21 auf der Hohlwelle 16 und mit einen gegenüberliegenden Nabenteil 24 auf der Hinterradachse 15. Im Bereich des Nabenteils 24 ist als Verbindung des Speicherrads 21 zur Hinterradachse 15 ein Freilauf als Rückdrehsperre 25 angebracht.

Es besteht ersichtlich die Möglichkeit, den Nabenteil 24 entweder wie dargestellt auf der feststehenden Hinterradachse 15 oder auf der Hinterradhohlwelle anzuordnen.

Die beidseitigen Lagerungen durch die Nabenteile 13 und 14 am Laufrad und/oder durch die Nabenteile 23 und 24 am Speicherrad können in einer alternativen Ausführungsform jeweils durch Verwendung eienr stabilen Radscheibe ersetzt werden, die nur einseitig für das Laufrad am Nabeteil 13 und für das Speicherrad am Nabenteil 24 gelagert ist.

Für die axiale Festlegung der Nabenteile 13 und 14 sowie 23 und 24 und der Hinterradhohlwelle 16 auf der Hinterradachse 15 stehen unterschiedliche bekannte Lagerausführungen oder Kombinationen von Lagern zur Verfügung, so daß in der Zeichnung nur schematische Lager dargestellt sind.

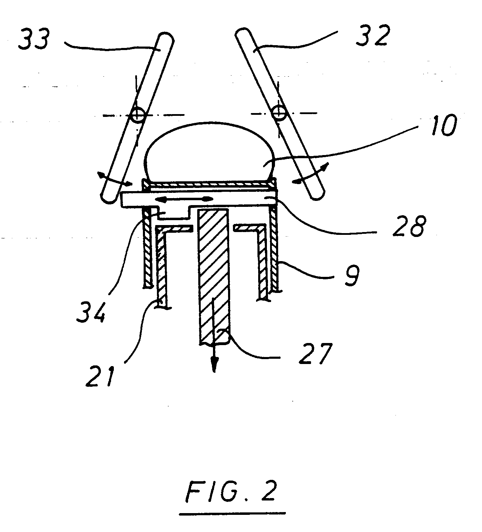

Im Bereich der Speicherradfelge 26 ist ein Schiebestück 27 vorgesehen, das an einem Laschenteil 28 am Laufrad 9 für die Ladung des Spiralfederspeichers 22 anliegt. Über eine z. B. in Fig. 2 näher dargestellte, schaltbare Mitnahmeverbindung zwischen dem Schiebestück 27 und dem Laschenteil 28 ist deren Verbindung reversibel lösbar. Das Schiebestück 27 wird durch die voll aufgezogene Spiralfeder 22 selbsttätig aus dem Bereich des Laschenteils 28 zurückgezogen, da ansonsten durch die voll gespannte Spiralfeder 22 das Laufrad blockiert oder eventuell die Spiralfeder reißen kann. Durch eine Schaltvorrichtung gemäß Fig. 2 kann die Anlageverbindung zwischen Schiebestück 27 und Laschenteil 28 wieder hergestellt werden und/oder wenn bei einer Speicherentleerung das Schiebestück 27 wieder selbsttätig ausführt.

Der erste Kettenradsatz 3 und der erste Hinterradritzelsatz 18 sind durch eine (schematisch angedeutete) erste Kette 29 miteinander verbunden. Ebenso sind der zweite Kettenradsatz 4 und der zweite Hinterradritzelsatz 20 über eine zweite Kette 30 miteinander verbunden.

Der erste Kettenradsatz 3, der erste Hinterradritzelsatz 18 und die erste Kette 29 sind Bestandteil einer allgemein bekannten und daher der Übersichtlichkeit wegen nicht im einzelnen dargestellten, ersten Kettenschaltung. Ebenso sind der zweite Kettenradsatz 4, der zweite Hinterradritzelsatz 20 und die zweite Kette 30 Bestandteil einer zweiten Kettenschaltung.

Die dargestellte Anordnung hat folgende Funktionen:
Für eine schnelle Energiespeicherung im Spiralfederspeicher 22 wird der zweite Hinterradritzelsatz 20 durch die vom Fahrer betätigbare Verriegelung 31 arretiert, so daß der im Achsbereich an der Hinterradhohlwelle 16 liegende Befestigungspunkt der Spiralfeder 22 festgehalten ist. Zudem sind das Schiebestück 27 und das Laschenteil 28 miteinander verbunden. Bei einer Bergabfahrt oder bei einer Fahrt mit Tretantrieb bewegt sich das Laufrad 9 und zugleich das damit verbundene Speicherrad 21, wodurch der Spiralfederspeicher 22 aufgezogen wird. Anschließend wird die Verbindung zwischen dem sich durch die Kraft der spannenden Spiralfeder 22 zurückziehenden Schiebestück 27 und dem Laschenteil 28 gelöst, so daß das Laufrad 9 unabhängig davon drehen kann. Die Speicherenergie bleibt aufgrund der Rückdrehsperre 25 im Spiralfederspeicher 22 erhalten. Das Fahrrad kann mit Hilfe der Tretkurbel, der Tretlagerhohlwelle 5, des ersten Kettenradsatzes 3 und des ersten Hinterradritzelsatzes 18 unabhängig vom Energiespeicher 22 betrieben werden.

Wenn Bewegungsenergie aus dem Energiespeicher 22 verwendet werden soll, wird vom Fahrer die Arretierung des zweiten Hinterradsitzelsatzes 20 gelöst, wodurch über die zweite Kette 30 ein Drehmoment auf den zweiten Kettenradsatz 4 übertragen wird, das über den Freilauf 7, die Tretlagerhohlwelle 5, den ersten Kettenradsatz 3, die erste Kette 29, den ersten Hinterradritzelsatz 18 und den Freilauf 19 auf das Laufrad 9 übertragen wird. Wegen des Freilaufs 6 kann die Übertragung dieser Drehbewegung zugleich oder unabhängig von einer Drehbewegung der Tretkurbelwelle 2 und damit unabhängig von einem Mittreten des Fahrers erfolgen.

Ersichtlich wird bei einer unterschiedlichen Drehzahl der Hinterradhohlwelle 16 und des an das Laufrad 9 mit dem Schiebestück 27 angekoppelten Speicherrads 21 der Energiespeicher 22 entweder geladen (hierzu ist die Verbindung zwischen Schiebestück 27 und Laschenteil 28 erforderlich) oder entladen. Die Lade- oder Entladegeschwindigkeit hängt dabei von der Größe der Relativdrehung ab. Diese kann je nach Auslegung der Kettenschaltungen damit eingestellt und variiert werden. Dadurch kann die Verwendung des Energiespeichers von einem Fahrer auf die jeweiligen Erfordernisse und Gegebenheiten gut abgestimmt werden.

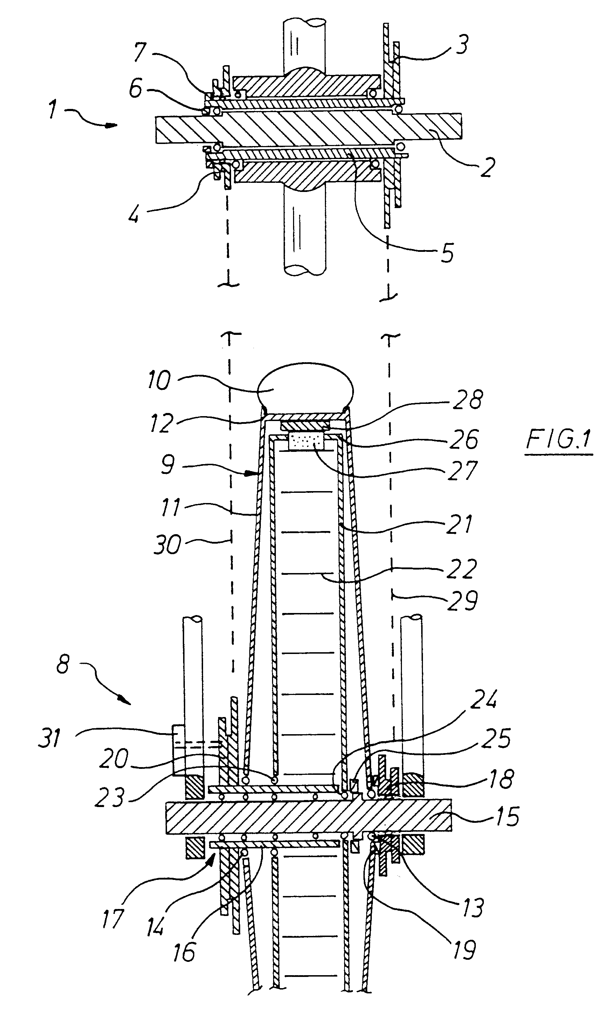

Aus Fig. 1 ist erkennbar, daß in einer einfachen Verwendung die Anordnung auch dann funktioniert, wenn die Mitnahmeverbindung zwischen dem Schiebestück 27 und dem Laschenteil 28 überhaupt nicht lösbar ist. Für eine Energiespeicherung wäre dabei lediglich das zweite Hinterradritzel 20 über die Verriegelung 31 zu arretieren (z. B. vor einer baldigen, erkennbaren Bergfahrt) und (bei der dann folgenden Bergfahrt) wäre durch Lösung der Arretierung der Ennergiespeicher wieder zu entleeren.

Wie oben beschrieben, wird eine selbsttätige Lösung der Mitnahmeverbindung dazu verwendet, um bei einem vollen Speicher und gespannter Spiralfeder ein Reißen der Spiralfeder oder ein Blockieren des Laufrades durch einen weiteren Speicheraufzug sicher zu vermeiden. Hierzu kann z. B. auch eine überdrückbare Ratschenverbindung verwendet werden. Zudem wäre es für die gleiche Funktion möglich, die Mitnahmeverbindung beizubehalten und durch bevorzugt automatische Umschaltung der Kettenschaltungen die Hinterradhohlwelle und das Speicherrad auf gleiche Drehzahl zu schalten, da dann kein weiterer Speicheraufzug erfolgt.

Zweckmäßig ist es jedoch auch, diese Verbindung gezielt für den Fahrer lösbar zu gestalten, so daß der Speicheraufzug vom Fahrer je nach den Geländegegebenheiten beliebig oft durch Lösen der Mitnahmeverbindung unterbrochen werden kann.

In Fig. 2 ist ein Ausschnitt aus dem oberen Bereich des Laufrades 9 gezeigt, wobei gleiche oder entsprechende Bauteile aus Fig. 1 mit entsprechenden Bezugszeichen versehen sind. Das Schiebestück 27 wird auch hier wie bereits oben beschrieben durch die Spiralfederkraft bei einem relativ vollen Speicher zurück in den Bereich des Speicherrades 21 und aus dem Bereich des Laschenteils 28 gezogen. Ersichtlich ist dann bei keiner Stellung des Laschenteils 28 eine Anlage und Mitnahmeverbindung möglich. Somit ist bei einem vollen Speicher ein Blockieren sicher vermieden und lediglich eine Energieabnahme möglich.

Das Laschenteil 28 ist vom Fahrer durch wechselweise Betätigung von Hebeln 32 oder 33, die am Fahrradrahmen angebracht sind (z. B. über nicht dargestellte Bowdenzüge), hin- und herschiebbar. In der dargestellten Position liegt dabei eine Nase 34 des Laschenteils 28 außerhalb des Bereichs des Schiebestücks 27. Bei einer Bewegung nach rechts wird dagegen die Nase 34 in den Bereich des Schiebestücks 27 verschoben. Nur in dieser Position ist ein Aufzug der Spiralfeder möglich. Im dargestellten Zustand ist dagegen der Aufzug der Spiralfeder vom Fahrer bewußt unterbrochen. Eine Verschiebung des Laschenteils 28 ist bei jedem Vorbeigang des Laschenteils 28 an den Hebeln 32, 33 bei jeder Radumdrehung möglich, wobei ggf. am Laschenteil 28 oder an den Enden der Hebel 32, 33 noch geeignete Einlaufschrägen vorzusehen sind.

## Patentansprüche

1. Antrieb mit Energiespeicher für ein Fahrrad,
mit einer Tretkurbeleinrichtung mit Tretpedalen als Tretkurbel an einer Tretkurbelwelle (2), wobei an einer ersten Seite der Tretkurbeleinrichtung ein erster Kettenradsatz (3) und an einer zweiten Seite ein zweiter Kettenradsatz (4) angeordnet sind,
mit einer Hinterradeinrichtung, bestehend aus einem Laufrad (9) mit Felge und Nabe, und einer feststehenden Hinterradachse (15), wobei an einer ersten Seite der Hinterradachse (15) ein erster Hinterradritzelsatz (18) und an einer zweiten Seite ein zweiter Hinterradritzelsatz (20) angeordnet sind,
mit einer ersten Kette (29) zur drehbaren Verbindung des ersten Kettenradsatzes (3) mit dem ersten Hinterradritzelsatz (18) und mit einer zweiten Kette (30) zur drehbaren Verbindung des zweiten Kettenradsatzes (4) mit dem zweiten Hinterradritzelsatz (20), und
mit einem Spiralfederspeicher (22) als Energiespeicher,
dadurch gekennzeichnet,
daß auf der Tretkurbelwelle (2) eine Tretlagerhohlwelle (5) drehbar gelagert ist, an deren einer Seite der erste Kettenradsatz (3) fest angebracht ist und an deren anderer Seite der zweite Kettenradsatz (4) drehbar gelagert ist,
daß die Tretlagerhohlwelle (5) mit der Tretkurbelwelle (2) durch einen Freilauf (6) verbunden ist, der bei einer Drehzahl der Tretkurbelwelle (2) kleiner als die der Tretlagerhohlwelle (5) frei läuft,
daß der zweite Kettenradsatz (4) mit der Tretlagerhohlwelle (5) durch einen Freilauf (7) verbunden ist, der bei einer Drehzahl des zweiten Kettenradsatzes (4) kleiner als die der Tretlagerhohlwelle (5) frei läuft,
daß der erste Hinterradritzelsatz (18) einerseits über die erste Kette (29) mit dem ersten Kettenradsatz (3) verbunden ist und andererseits mit dem Laufrad (9) durch einen Freilauf (19) verbunden ist, der bei einer Drehzahl des ersten Hinterradritzelsatzes (18) kleiner als die des Laufrades (9) frei läuft,
daß innerhalb des Laufradbereichs ein zweites Rad als Speicherrad (21) drehbar angebracht ist, innerhalb dem der Spiralfederspeicher (22) enthalten ist und in dessen Bereich eine Hinterradhohlwelle (16) ragt, wo ein inneres Ende der Spiralfeder des Spiralfederspeichers (22) befestigt ist, und die Hinterradhohlwelle (16) drehbar auf der Hinterradachse (15) gelagert ist,
daß an der Hinterradhohlwelle (16) der zweite Hinterradritzelsatz (20) fest angebracht ist, der mit der zweiten Kette (30) mit dem zweiten Kettenradsatz (4) verbunden ist,
daß die Drehzahl des zweiten Hinterradritzelsatzes (20) und der Hinterradhohlwelle (16) durch eine vom Fahrer betätigbare Drehzalreduziereinrichtung gegenüber der Drehzahl des Speicherrades (21) reduzierbar ist,
daß das andere Ende der Spiralfeder (22) am Außendurchmesser des Speicherrades (21) bzw. der Speicherradfelge (26) befestigt ist,
daß das Speicherrad (21) mit dem Laufrad (9) über eine Mitnahmeverbindung (27, 28) verbunden ist, und
daß das drehbar gelagerte Speicherrad (21) mit der feststehenden Hinterradachse (15) durch einen Freilauf als Rückdrehsperre (25) verbunden ist, der das Speicherrad (21) gegen eine Rückwärtsdrehung abstützt.

2. Antrieb nach Anspruch 1, dadurch gekennzeichnet, daß die Drehzahlreduziereinrichtung eine betätigbare Brems- und/oder Verriegelungseinrichtung zur Bremsung und/oder Arretierung des Hinterradritzelsatzes ist.

3. Antrieb nach Anspruch 1 oder Anspruch 2, dadurch gekennzeichnet, daß die Mitnahmeverbindung am Außendurchmesser des Speicherrades (21) liegt und durch ein verstellbares Schiebestück (27) am Speicherrad (21) und durch ein für eine Anlageverbindung zugeordnetes Laschenteil (28) am Laufrad (9) lösbar gebildet ist.

4. Antrieb nach einem der Ansprüche 1 bis 3, dadurch gekennzeichnet, daß die Hinterradhohlwelle (16) mit einem Überstand (17) einseitig aus dem Nabenbereich des Laufrads (9) vorsteht, wobei eine erste Seite des Laufrads (9) mit einem ersten Nabenteil (13) auf der Hinterradachse (15) läuft und die andere zweite Seite des Laufrads (9) auf dem Überstand (17) der Hinterradhohlwelle (16) läuft.

5. Antrieb nach einem der Ansprüche 1 bis 4, dadurch gekennzeichnet, daß das Speicherrad (21) mit seinem Außendurchmesser etwa dem Innendurchmesser der Laufradfelge entspricht und/oder daß das Speicherrad (21) über seine radiale Erstreckung die gleiche Querabmessung entsprechend der geringsten Innenquerabmessung des Laufrads (9) aufweist mit einer zugeordneten gleichen Querabmessung der im Speicherrad (21) angeordneten Spiralfeder (22).

6. Antrieb nach Anspruch 3, dadurch gekennzeichnet, daß die Mitnahmeverbindung dadurch lösbar ist, daß das Schiebestück (27) durch die Kraft der Spiralfeder (22) bei relativ vollem Energiespeicher selbsttätig zurückgeschoben wird und/oder daß das Laschenteil (28) beim Vorbeigang an einem Rahmenteil über betätigbare Hebelteile verschiebbar ist.

7. Antrieb nach Anspruch 2, dadurch gekennzeichnet, daß die Verriegelung des zweiten Hinterradritzelsatzes (20) aus einem Riegel besteht, der gegenüber einem festen Rahmenteil mit Hilfe eines vom Lenker aus betätigbaren Bowdenzugs verstellbar ist.

8. Antrieb nach Anspruch 7, dadurch gekennzeichnet, daß die Verriegelung zudem eine Sicherheitsarretierung aufweist, die nur durch das Gewicht eines auf dem Fahrrad sitzenden Fahrers freigegeben wird.

9. Antrieb nach einem der Ansprüche 1 bis 8, dadurch gekennzeichnet, daß der erste und/oder zweite Kettenradsatz (3, 4) und der erste und/oder zweite Hinterradritzelsatz (18, 20) aus wenigstens zwei Zahnrädern unterschiedlichen Durchmessers bestehen und Bestandteile jeweils einer an sich bekannten Kettenschaltung sind.

10. Antrieb nach einem der Ansprüche 1 bis 9, dadurch gekennzeichnet, daß der Durchmesser des Zahnrades oder der Zahnräder des ersten Kettenradsatzes (3) größer als der Durchmesser des Zahnrades oder der Zahnräder des zweiten Kettenradsatzes (4) ist und der Durchmesser des Zahnrades oder der Zahnräder des ersten Hinterradritzelsatzes (18) kleiner als der Durchmesser des Zahnrads oder der Zahnräder des zweiten Hinterradritzelsatzes (20) ist.

## Claims

1. Transmission with energy storing system for a bicycle, with a pedal crank arrangement comprising pedals as a pedal crank on a pedal crankshaft (2), a first chainwheel set (3) being arranged on a first side of the pedal crank arrangement and a second chainwheel set (4) being arranged on a second side, with a rear wheel arrangement comprising a running wheel (9) having a rim and a hub, and with a fixed rear-wheel axle (15), a first rear-wheel sprocket set (18) being arranged on a first side of the rear-wheel axle (15) and a second rear-wheel sprocket set (20) being arranged on a second side, with a first chain (29) for the rotatable connection of the first chainwheel set (3) to the first rear-wheel sprocket set (18) and with a second chain (30) for the rotatable connection of the second chainwheel set (4) to the second rear-wheel sprocket set (20), and with a spiral-spring storage device (22) as an energy storing system; characterized in that rotatably mooted on the pedal crankshaft (2) is a hollow bottom-bracket shaft (5), on one end of which the first chainwheel set (3) is rigidly mounted and on the other end of which-the second chainwheel set (4) is rotatably mounted; in that the hollow bottom-bracket shaft (5) is connected to the pedal crankshaft (2) by a freewheel (6) which freewheels when the speed of the pedal crankshaft (2) is lower than that of the hollow bottom-bracket shaft (5); in that the second chainwheel set (4) is connected to the hollow bottom-bracket shaft (5) by a freewheel (7) which freewheels when the speed of the second chainwheel set (4) is lower than that of the hollow bottom-bracket shaft (5); in that the first rear-wheel sprocket set (18) is connected, on the one hand, to the first chainwheel set (3) by the first chain (29) and, on the other hand, to the running wheel (9) by a free-wheel (19) which freewheels when the speed of the first rear-wheel sprocket set (18) is lower than that of the running wheel (9); in that rotatably mounted within the running-wheel region is a second wheel serving as a storage wheel (21), within which the spiral-spring storage device (22) is contained and into the region of which a hollow rear-wheel shaft (16) projects, where an inner end of the spiral spring of the spiral-spring storage device (22) is attached, and the hollow rear-wheel shaft (16) is rotatably mounted on the rear-wheel axle (15); in that the second rear-wheel sprocket set (20) is rigidly mounted on the hollow rear-wheel shaft (16) and is connected to the second chainwheel set (4) by means of the second chain (30); in that the speed of the second rear-wheel sprocket set (20) and of the hollow rear-wheel shaft (16) can be reduced relative to the speed of the storage wheel (21) by a speed reduction device that can be actuated by the cyclist; in that the other end of the spiral spring (22) is attached to the outside diameter of the storage wheel (21) or of the storage-wheel rim (26); in that the storage wheel (21) is connected to the running wheel (9) by way of a driving connection (27, 28); and in that the rotatably mounted storage wheel (21) is connected to the fixed rear-wheel axle (15) by a freewheel as a reverse-rotation lock (25) which supports the storage wheel (21) against backwards rotation.

2. Transmission according to Claim 1, characterized in that the speed reduction device is an actuable braking and/or locking device for braking and/or locking the rear-wheel sprocket set.

3. Transmission according to Claim 1 or Claim 2, characterized in that the driving connection is situated at the outside diameter of the storage wheel (21) and is formed releasably by an adjustable slider (27) on the storage wheel (21) and by an associated lug component (28) on the running wheel (9), for the purpose of making a contact connection.

4. Transmission according to one of Claims 1 to 3, characterized in that the hollow rear-wheel shaft (16) projects with an overlap (17) from one side of the hub region of the running wheel (9), a first side of the running wheel (9) running with a first hub part (13) on the rear-wheel axle (15) and the other, second side of the running wheel (9) running on the overlap (17) of the hollow rear-wheel shaft (16).

5. Transmission according to one of Claims 1 to 4, characterized in that the outside diameter of the storage wheel (21) corresponds approximately to the inside diameter of the running-wheel rim and/or in that the storage wheel (21) has the same transverse dimension over its radial extent, corresponding to the smallest interior transverse dimension of the running wheel (9), with an associated identical transverse dimension of the spiral spring (22) arranged in the storage wheel (21).

6. Transmission according to Claim 3, characterized in that when the energy storing system is relatively full, the driving connection can be released by the slider (27) being pushed back automatically by the force of the spiral spring (22) and/or in that the lug component (28) is displaceable by means of actuable lever components as it passes a part of the frame.

7. Transmission according to Claim 2, characterized in that the locking means for the second rear-wheel sprocket set (20) comprises a locking bar which can be adjusted relative to a fixed part of the frame with the aid of a Bowden cable actuated from the handlebar.

8. Transmission according to Claim 7, characterized in that the locking means furthermore has a safety catch which is released only by the weight of a cyclist seated on the bicycle.

9. Transmission according to one of Claims 1 to 8, characterized in that the first and/or second chainwheel set (3, 4) and the first and/or second rear-wheel sprocket set (18, 20) comprise at least two sprockets of different diameter and each form parts of a dérailleur shift mechanism known per se.

10. Transmission according to one of Claims 1 to 9, characterized in that the diameter of the sprocket or sprockets of the first chainwheel set (3) is greater than the diameter of the sprocket or sprockets of the second chainwheel set (4), and the diameter of the sprocket or sprockets of the first rear-wheel sprocket set (18) is smaller than the diameter of the sprocket or sprockets of the second rear-wheel sprocket set (20).

## Revendications

1. Mécanisme d'entraînement avec accumulateur d'énergie pour bicyclette, comprenant
un dispositif à manivelles avec pédales constituant un pédalier monté sur un axe de pédalier (2), un premier jeu de plateaux dentelés (3) étant dispose d'un premier côte du dispositif à manivelles et un second jeu de plateaux dentelés (4) étant disposé de l'autre côté,
un dispositif de roue arrière, se composant d'une roue de roulement (9), avec jante et moyeu et d'un axe fixe (15) de roue arrière, un premier jeu de pignons de roue arrière (18) étant dispose d'un premier côte de l'axe (15) de roue arrière et un second jeu de pignons de roue arrière (20) étant disposé de l'autre côté,
une première chaîne (29) pour transmettre le mouvement de rotation du premier jeu de plateaux (3) au premier jeu de pignons de roue arrière (18) et une seconde chaîne (30) pour transmettre le mouvement de rotation du second jeu de plateaux (4) au second jeu de pignons de roue arrière (20), et
un accumulateur à ressort spiral (22) servant d'accumulateur d'énergie,
caractérisé en ce que
il est monté à rotation, sur l'axe de pédalier (2), un arbre creux (5) formant palier de pédalier, sur un côté duquel le premier jeu de plateaux (3) est fixé et sur l'autre côté duquel le second jeu de plateaux (4) est monté à rotation,
l'arbre creux (5) formant palier de pédalier est relié à l'axe de pédalier (2) par une roue libre (6) qui tourne à vide lorsque la vitesse de rotation de l'axe de pédalier (2) est plus petite que celle de l'arbre creux (5) formant palier de pédalier,
le second jeu de plateaux (4) est relié à l'arbre creux (5) formant palier de pédalier par une roue libre (7) qui tourne à vide lorsque la vitesse de rotation du second jeu de plateaux (4) est plus petite que celle de l'arbre creux (5) formant palier de pédalier,
le premier jeu de pignons de roue arrière (18) est relié d'une part au premier jeu de plateaux (3) par l'intermédiaire de la première chaîne (29) et, d'autre part, à la roue de roulement (9) par une roue libre (19) qui tourne à vide lorsque la vitesse de rotation du premier jeu de pignons de roue arrière (18) est plus petite que celle de la roue de roulement (9),
il est monté à rotation, à l'intérieur de la roue de roulement, une seconde roue qui sert de roue d'accumulateur (21), à l' intérieur de laquelle est contenu l'accumulateur a ressort spiral (22) et dans une zone de laquelle fait saillie un arbre creux de roue arrière (16) auquel est fixée l'extrémité interne du ressort spiral de l'accumulateur à ressort spiral (22), l'arbre creux de roue arrière (16) étant monté à rotation sur l'axe de roue arrière (15),
à l'arbre creux de roue arrière (16) est fixé le second jeu de pignons de roue arrière (20) qui est relié au second jeu de plateaux (4) par l'intermédiaire de la seconde chaîne (30),
la vitesse de rotation du second jeu de pignons de roue arrière (20) et de l'arbre creux de roue arrière (16) peut être réduite par rapport à la vitesse de rotation de la roue d'accumulateur (21) par un dispositif réducteur de vitesse manoeuvrable par le cycliste,
l'autre extrémité du ressort spiral (22) est fixée à la périphérie de la roue d'accumulateur (21) ou à la jante (26) de cette roue,
la roue d'accumulateur (21) est reliée à la roue de roulement (9) par une liaison d'entraînement (27, 28), et
la roue d'accumulateur (21), montée à rotation, est reliée à l'axe fixe (15) de roue arrière par une roue libre (25) servant de dispositif anti-rotation inverse, qui s'oppose à une rotation en arrière de la roue d'accumulateur (21).

2. Mécanisme d'entraînement selon la revendication 1, caractérisé en ce que le dispositif réducteur de vitesse de rotation est un dispositif de freinage et/ou de verrouillage pour freiner et/ou bloquer le jeu de pignons de roue arrière.

3. Mécanisme d'entraînement selon la revendication 1 ou 2, caractérisé en ce que la liaison d'entraînement est située à la périphérie de la roue d'accumulateur (21) et est formée, de manière à pouvoir être interrompue, par une pièce coulissante mobile (27), situé sur la roue d'accumulateur (21), et par un élément à languette (28), qui lui est associé sur la roue de roulement (9) en vue d'une liaison par contact.

4. Mécanisme d'entraînement selon l'une quelconque des revendications 1 à 3, caractérisé en ce que l'arbre creux de roue arrière (16) a une partie saillante (17) qui sort d'un côté du moyeu de la roue de roulement (9), un premier côté de la roue de roulement (9) tournant, par une première partie de moyeu (13), sur l'axe de roue arrière (15) et l'autre côté de la roue de roulement (9) tournant sur la partie saillante (17) de l'arbre creux de roue arrière (16).

5. Mécanisme d'entraînement selon l'une quelconque des revendications 1 à 4, caractérisé en ce que la roue d'accumulateur (21) a un diamètre extérieur qui correspond à peu près au diamètre intérieur de la jante de roue de roulement et/ou en ce que la roue d'accumulateur (21) a, sur toute son étendue radiale, une dimension transversale constante qui correspond à la plus petite dimension transversale interne de la roue de roulement (9), et le ressort spiral (22) disposé dans la roue d'accumulateur (21) a une dimension transversale constante correspondante.

6. Mécanisme d'entraînement selon la revendication 3, caractérisé en ce que la liaison d'entraînement est susceptible d'être interrompue par le fait que la pièce coulissante (27) est rétractée automatiquement sous l'effet de la force du ressort spiral (22) lorsque l'accumulateur d'énergie est relativement plein et/ou par le fait que l'élément a languette (28) peut être déplacé par des éléments de levier manoeuvrables, lorsqu'il passe en regard d'un élément du cadre.

7. Mécanisme d'entraînement selon la revendication 2, caractérisé en ce que le dispositif de verrouillage du second jeu de pignons de roue arrière (20) est constitué par un verrou qui peut être déplacé par rapport à un élément fixe du cadre au moyen d'un câble sous gaine manoeuvrable depuis le guidon.

8. Mécanisme d'entraînement selon la revendication 7, caractérisé en ce que le dispositif de verrouillage comporte en outre un système de blocage de sécurité qui n'est libéré que par le poids d'un cycliste qui s'assied sur la bicyclette.

9. Mécanisme d'entraînement selon l'une quelconque des revendications 1 à 8, caractérise en ce que le premier et/ou le second jeu de plateaux (3, 4) et le premier et/ou le second jeu de pignons de roue arrière (18, 20) se composent d'au moins deux roues dentées de diamètres différents et sont des éléments, les uns comme les autres, d'an changement de vitesse de bicyclette en soi connu.

10. Mécanisme d'entraînement selon l'une quelconque des revendications 1 à 9, caractérisé en ce que le diamètre de la roue dentée ou des roues dentées du premier jeu de plateaux (3) est plus grand que le diamètre de la roue dentée ou des roues dentées du second jeu de plateaux (4) et le diamètre de la roue dentée ou des roues dentées du premier jeu de pignons de roue arrière (18) est plus petit que le diamètre de la roue dentée ou des roues dentées du second jeu de pignons de roue arrière (20).
